# EUROPEAN PATENT APPLICATION

(11) **EP 3 264 773 A1**
(43) Date of publication of application: **03.01.2018**
(21) Application number: 17020276.6
(22) Date of filing: 29.06.2017
(51) Int. Cl.: H04N 21/218, G01P 3/38, G01P 3/64, G01P 3/68, H04N 21/2187, H04N 21/8547

(54) **AN APPARATUS, SYSTEM, AND METHOD FOR AUTOMATED REAL-TIME LIVE VIDEO STREAMING FOR EQUESTRIAN SPORTS**

(30) Priority: 30.06.2016 US 201662357011 P
(71) Applicant: Deillon, David, 1143 Apples (CH)
(72) Inventor: Deillon, David, 1143 Apples (CH)
(74) Representative: Cosmovici, Paul

(57) **Abstract**

A system and methods for generating automated real-time live video stream of a target that is moving around an obstacle of pre-defined area uses an automated video streaming provided with a plurality of video cameras that are positioned about the pre-defined area by tracking the moving target and displaying the moving target on the animated timeline such as current class leader will be automatically displayed and compared, in real time, with the rider on the track and integrating the data collected by the wireless network to make video stream from that camera to the optimized video stream.

## Description

### BACKGROUND OF THE INVENTION

This invention relates to a live video streaming for use in equestrian sports or training sessions to generate a video of that event and allow to view video from different angles for statistics and analysis.

The utilization of recorded video pictures with the end goal of assessing the execution of a horse and/or a rider is typical in equestrian sports. The most widely recognized technique for accomplishing these video pictures is using a solitary camcorder. There is growing interest in the tracking of thoroughbred horses during competitions and trainings in order to gather information on various aspects of the race, course, trial or exercise.

During the course, it is difficult to predict or to explain the challenges. One of them consist of two statistical groups, the percentage of riders outside the authorized time and a visual indication number of penalties by obstacle of an event or a dam. The number of obstacles can be presented in two ways, i.e. graphically or in tabular form. Various methods have been employed to provide a solution to the system requirements outlined above. The majority are based on the Global Positioning System (GPS) or the use of radio frequency identification (RFID). Other statistics can be useful to explain the challenges such as trajectories, speeds, overall distance, take-off and landing distance, number of strides and timestamps.

Patent application WO 2011116421 A1 assigned to Hildebrandt Michael relates to tracking objects and determining their position and/or progress and performance over time. Here they use emitting line-of-sight EM radiation from at least one beacon, each beacon located to provide a means of reference for moving object.

Patent application US 2004/0104845 A1 assigned to McCarthy Robert J describe about software which tracks the trainers riding horses using sensors and the video processor can display the data relating to the objects separately or together with the identity and the positional data of the objects in real-time.

Existing prior art solutions are expense, multipathing, lack of accuracy and heavy on-course infrastructure. This present invention offers an improvement over traditional methods of real time video streaming of equestrian sports.

### SUMMARY OF THE INVENTION

It is an object of the present invention described herein to overcome or alleviate at least one of the above noted drawbacks, disadvantages or problems of related art systems or to at least provide a useful alternative to related art systems.

A computer-based data processing method and system is disclosed that employs at least one video camera capable of providing automated real- time live video of a moving target. In an embodiment, a system and method for generating an optimized real time video stream of the target that is moving within a predefined area of obstacles using an automated real-time live system provided with a plurality of video cameras, each producing a video stream, that are positioned in the predefined area is disclosed.

The preferred embodiment of the system also displays the timeline of the rider on the track and automatically compares in real time with the current class leader. When the rider begins the race route, rider position will be displayed on the animated timeline and the collected data is analyzed and displayed in the timeline.

In a preferred embodiment, integrated transmitter sensors and/or reflectors are installed in the obstacle to track the rider and will detect automatically intermediate timing on each obstacle. Then a timer gets started when the race begins and image are collected from the video cameras and data are collected and analyzed and sent to the computer for storage using a wireless network. Current race leader and rider and their statistical data can be displayed in a TV/video streaming, screen arena, superposition video or video overlay, internet or mobile or video devices in real time. Calculation of statistical data and results can be displayed with 2D/3D animation on the big screen, TV, or any other display devices showing the various parameters.

This invention can collect automatically the type of penalties as referred in the FEI (Federation Equestre Internationale) rules, and assigned to each riders and horses during the event. Then the data are stored in a database and can be used for gambling and prediction. It can also automatically compare the statistics of two riders, the leader of the class and the current rider.

### BRIEF DESCRIPTION OF DRAWINGS

Figure 1 is a layout showing software components with screen display and corresponding simulated video output in accordance with an embodiment of the present invention;
Figure 2 illustrates an overview of hardware components in accordance with an embodiment of the present invention;
Figure 3 illustrates a plan view of obstacles pathway being viewed using multiple cameras in accordance with an embodiment of the present invention

### DETAILED DESCRIPTION OF THE INVENTION

The following detailed description of the invention makes reference to the accompanying drawings. Although the description includes exemplary embodiments, other embodiments are possible, and changes may be made to the embodiments described without departing from the spirit and scope of the invention. Wherever possible, the same reference numbers will be used throughout the drawings and the following description to refer to the same and like parts.

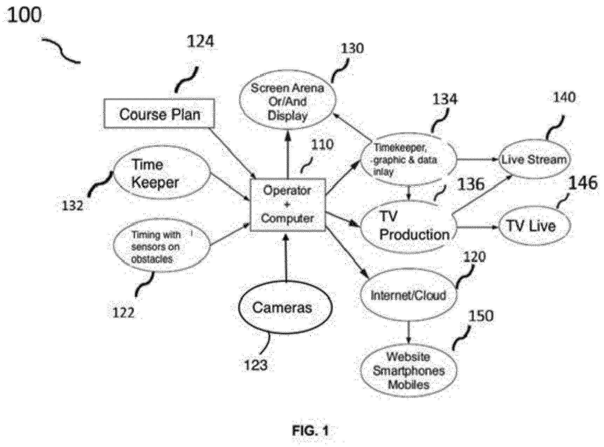

According to FIG. 1 of the present invention is an automated real-time live video streaming **100** for equestrian sports during a showjumping course, trial or exercise. In particular, this invention is directed to real-time live video streaming of horses using video cameras and placing sensors on all obstacles on the course. This invention relies on fixed cameras type "Manta" with lentils **123** that send the video stream to the operator combined with a computer **110**. The moving object or rider is displayed in the TV screen / arena or any video display device **130** and the data collected during the course plan **124**, from the timekeeper **132**, timing from the obstacle sensor **122** is transmitted to the computer for statistical analysis and displayed in the timeline. The statistical data can be sent to TV production **136** and transmitted to live TV **146** and displayed in any internet devices or cloud devices **120** in real time. The statistical data can also be displayed on any website / smart phone or mobile devices **150** in an animated fashion. The timekeeper, graphic and data inlay **134** can display and convert to a video live stream **140**. Intergraded sensor can be used to obtain the signal from moving object and sent to the video camera(s) located at points of convenience. The accuracy of the system is relayed on the number of cameras and the field and depth of view. Similarly, pixel resolution (accuracy) can be increased by using more video cameras incorporating both side and head-on views.

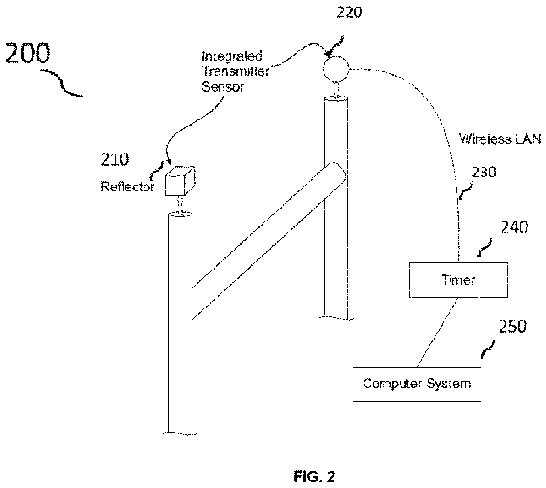

According to FIG.2, there is provided a means **200** for reflector **210** and integrated transmitter sensor **220** whereby objects such as horses and riders participants can be identified and tracked in real time and means for a TV/video streaming, screen arena, superposition video or video overlay, internet by which the current race leader will be automatically displayed on video stream and compared, in real time, with the rider on the track. The video streaming of data for display devices can be implemented using a wireless LAN **230** network system. As soon as the rider begins the race route, the timer **240** starts recording the rider position which will be displayed on the video stream in animated format. Statistical information on the positions of individual horses during the course can be identified. The current class leader will be monitored and data regarding other rider are calculated and stored in a computer system **250** for display.

In preference, the means for determining the position of a moving object including both animate and inanimate objects adapted to be sensed by at least one video camera. However, it is preferred that a plurality of cameras be used such that the precise location of the object can be determined at any given time for video tracking.

It is further preferred that appropriate software be associated with each camera such that its output can be used to determine real time positional information for video streaming. Each object emits a sensor signal from the integrated transmitter sensor and reflector installed in obstacle when crosses by horse, jockey or any other object, that it can be identified by each camera. The precise type of signal used is not restricted in embodiments of the invention and any appropriate means can be used. For example, the measuring parameter can be distance between the obstacles that could be detected by an appropriate camera.

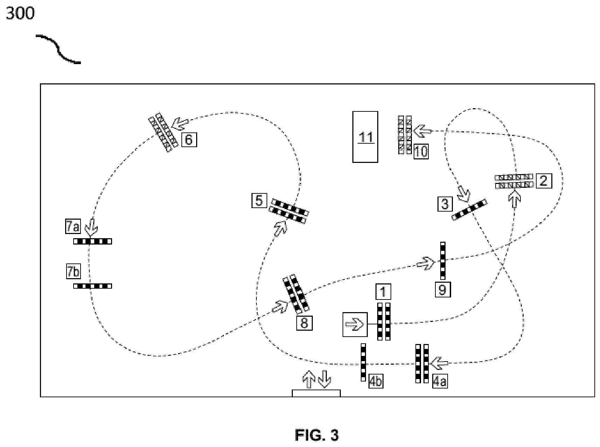

According to FIG. 3 shows the most knocked obstacles **300** in which the automated real-time live video is recorded. This system also includes a display device which comprises a hardware and/or software component, and enabling the automated live video streaming of data as well as for controlling the various features of the system using a wireless LAN network. Sensors are connected to timer and connected to the computer via wireless LAN. The obstacles placed in the race course path numbered 1, 2, 3, 4a, 4b, 5, 6, 7a, 7b, 8, 9 and 10. Live processing of course data and further analysis of data can be calculated using timing departure, lap times/time stamps, arrival timing which is calculated automatic using data collected through sensor cells placed on each obstacle or data collected via a manual operator. Events recorded by obstacles such as crossed, foul, another penalty is calculated automatic or manual via an operator. In the live video streaming, final penalties and final time can be inserted either in an automatic or manual mode.

In a preferred embodiment, automated real-time live video streaming in TV or screen arena can display metro comparison, percentage of riders out of time, percentage of riders without penalties / penalties with 4pts / disposal or abandonment, percentage of faults by obstacles and analysis of the most knocked obstacles. The display device shows various data parameters such as time interval in seconds between the obstacles of the route, time difference between the current leader and the rider on the track, at each obstacle and detection of overcome obstacles.

In one embodiment, the automated real-time live video streaming system is configured with appropriate software to utilize the data collected by the integrated sensing system as a user input command for executing various functions of the automated live video streaming system. For example, displaying the intermediate times at the moment of passing each obstacle by a rider in a table format or in the form of map. Also the display device shows the number of horses still to go and automatic calculation of the ranking compared to the type of event/class and automatic comparison of the current leader with track rider.

The data collected by the sensor or retro reflector are stored in the cloud and it comprises of rider, horse, and obstacles. In the metro TV display / video streams, the data displayed can be starting signal and automatic arrival, final time, intermediate times by obstacles, visual and automatic calculation of the time difference jumper track in comparison with the current leader of the race on each hurdle crossed the path, visual indication if the rider on the track is ahead or behind the current leader (showing by red or green dot. For example, when the rider arrives late, it shows red color, when he is ahead of others, it is green and if current leader and rider are same, then it shows gray. This also automatically calculates the interval between two obstacles and does comparison with the current leader. Dynamic spacing "round" is displayed on the timeline when the rider crossed an obstacle along with the obstacle height. There are two scenarios for displaying the penalty wherein in one case, the pellets indicate if the rider is behind or ahead of the leader and the other case, the pellets indicate either: if the rider is late or early or if there was a penalty or not. The system also displays the following data such as percentage of riders outside the time allowed without penalty or with penalties (4pts, 8pts, etc.), indication of the reference time, indication of penalties, indication of the name of the horse, the rider, the race number and nationality of the rider. The software also shows the three most knocked obstacles in a percentage value on the map and the grouped statistics such as % of men and women, % geldings / stallions / mares and % of the type of fault obstacles oxer / vertical.

The tracking system will allow to automate data collection, such as intermediate time and type of penalties (pool down, refuse and other penalties). It also provides an ability to do a superposition of two riders automatically based on the video stream by tracking each riders.

The proposed invention is automated real-time live video streaming software that captures images in several different angles via cameras installed all around and above for rides the training paddock. With this software tool, coaches and riders can perform simple editing and sharing easily training sessions on various applications but not limited to Internet.

The preferred embodiment discloses an automated video streaming software with coaching capabilities that defines a set of tools for management trainings of a coach or jumper and it comprises collaborative calendar and system annotations. The rider will be able to take notes while the coach will draw and annotate directly on the video captures to explain a visual way the details of training and illustrate the advice given. This tool can be used by a remote application wherein the user can watch videos of training and record voice memo and the trainee will then have details about training feedback.

While the invention has been particularly shown and described with references to selected embodiments thereof; it will be readily understood by one of ordinary skill in the art that various changes in form and details may be made therein without departing from the scope of the present invention.

## Claims

1. A system comprising:
a camera located at a first geographical location, the camera configured and/or programmed to capture real-time video of a first moving target and a second moving target and produce a real-time video stream;
a timer configured and/or programmed to provide timing data;
a sensor and/or reflector located at a second geographical location, the sensor and/or reflector configured and/or programmed to automatically detect the first moving target and the second moving target to produce detection data;
a receiver configured and/or programmed to receive, in real-time, the real-time video stream, the detection data, and timing data;
a computer configured and/or programmed to:
perform an analysis of the detection data and the timing data to produce statistical data,
produce data for displaying a video of the first moving target and the second moving target and the statistical data, wherein
the first geographical location being a separate and different location than the second geographical location.

2. The system according to claim 1, wherein
the computer is further configured and/or programmed to perform the analysis of the first video stream, the detection data, and the timing data to produce said statistical data.

3. A method comprising:
capturing, at a first geographical location, real-time video of a first moving target and a second moving target and produce a real-time video stream;
automatically detecting, at a second geographical location, the first moving target and the second moving target and producing detection data;
receiving, in real-time, the real-time video stream, the detection data, and timing data;
performing an analysis of the detection data and the timing data to produce statistical data;
producing data for displaying a video of the first moving target and the second moving target and the statistical data, wherein
the first geographical location being a separate and different location than the second geographical location.

4. The method according to claim 3, wherein
performing said analysis of the first video stream, the detection data, and the timing data to produce said statistical data.
